# EUROPEAN PATENT APPLICATION

(11) **EP 1 408 073 A1**
(43) Date of publication of application: **14.04.2004**
(21) Application number: 03022961.1
(22) Date of filing: 09.10.2003
(51) Int. Cl.: C08K 3/00

(54) **Thermoplastic polymer composition containing a flame retardant**

(30) Priority: 11.10.2002 JP 2002298490
(71) Applicant: Sumitomo Chemical Company, Limited, Chuo-ku Osaka 541-8550 (JP)
(72) Inventor: Takemura, Kazuki, Niihama-shi Ehime (JP)
(74) Representative: VOSSIUS & PARTNER

(57) **Abstract**

A thermoplastic polymer composition is provided. The thermoplastic polymer composition comprising: a metal hydroxide containing at least one metal selected from the group consisting of magnesium, aluminum and calcium, at least one transition metal selected from the group consisting of manganese, nickel and zinc, and hydroxyl; a borate; and a thermoplastic polymer.

## Description

The present invention relates to a thermoplastic polymer composition.

Thermoplastic polymer compositions containing a thermoplastic polymer and a flame retardant have been widely used. For example, compositions containing a thermoplastic polymer and magnesium hydroxide, aluminum hydroxide, or calcium hydroxide as a flame retardant have been known (JP-A-52-029839, JP-A-52-121058, JP-A-11-181305).

Further, as compositions improved in flame retardancy, polymer compositions comprising a polymer and metal hydroxide containing at least one metal selected from the group consisting of magnesium, aluminum and calcium as a flame retardant, at least one transition metal selected from the group consisting of manganese, nickel and zinc, and hydroxyl have been known (JP-A-07-286101, JP-A-06-041441).

However, among conventional thermoplastic polymer compositions, further improvements including longer flameless combustion time without flame have been desired.

An object of the present application is to develop polymer compositions having excellent flame retardancy.

This object has been solved according to the present application by providing a thermoplastic polymer composition comprising metal hydroxide containing at least one metal selected from the group consisting of magnesium, aluminum and calcium, at least one transition metal selected from the group consisting of manganese, nickel and zinc, and hydroxyl; a borate; and a thermoplastic polymer.

Further, the present invention provides a production method of a thermoplastic polymer composition made by melt-kneading the metal hydroxide containing at least one metal selected from the group consisting of magnesium, aluminum and calcium, at least one transition metal selected from the group consisting of manganese, nickel and zinc, and hydroxyl; a borate; and a thermoplastic polymer.

The thermoplastic polymers used in the present invention are, for example, an olefin resin (polyolefin) such as polyethylene, polypropylene, ethylene-propylene copolymer, ethylene-1-butene copolymer, ethylene-propylene-conjugated diene copolymer, ethylene-ethyl acrylate copolymer, ethylene-glycidyl methacrylate copolymer, ethylene-vinyl acetate-glycidyl methacrylate copolymer or ethylene-propylene-maleic anhydride copolymer; a styrene resin such as polystyrene, styrene-acrylonitrile copolymer or acrylonitrile-butadiene-styrene copolymer (ABS); a polyester resin such as polyethylene terephthalate; a polycarbonate resin; a polyamide resin; a polyphenylene oxide resin; a denatured polyphenylene oxide resin; a polyphenylene sulfide resin; a polyoxymethylene resin; a thermoplastic elastomer such as polyester-polyether elastomer, polyester-polyester elastomer and the like, and a preferred thermoplastic polymer is polyolefin.

The metal hydroxide contained in the thermoplastic polymer composition of the present invention comprises a metal selected from magnesium, aluminum and calcium; a transition metal selected from manganese, nickel and zinc; and hydroxyl.

The above metals are primary elements constituting the metal hydroxide and the amount of the metals is usually 30% or more by weight of the metal hydroxide. The metal (s) may be any one of magnesium, aluminum and calcium, or may be a combination of two or more kinds of metals, that is, a combination of magnesium and calcium, a combination of aluminum and calcium, a combination of magnesium and aluminum or a combination of magnesium, aluminum and calcium. Among them, magnesium alone, calcium alone or the combination of magnesium and calcium is preferable. When two or more kinds of metals are contained in the metal hydroxide, the total amount of the metals is usually 30% or more by weight of the metal hydroxide.

The above transition metal may be any one of manganese, nickel and zinc or may be a combination of two or more kinds of metals, that is, a combination of manganese and nickel, a combination of manganese and zinc, a combination of nickel and zinc or a combination of manganese, nickel and zinc. The amount of the transition metals is 0.2% or more by weight of the metal hydroxide and is preferably 0.5% or more by weight thereof, or 20% or less by weight of the metal hydroxide, and is preferably 5% or less by weight thereof. When two or more kinds of transition metals are contained in the metal hydroxide, the total amount of the transition metals is 0.2% or more by weight of the metal hydroxide and is preferably 0.5% or more by weight thereof, or 20% or less by weight of the metal hydroxide and is preferably 5% or less by weight thereof. When the amount of the transition metals is within the range described above, it is possible to obtain a thermoplastic polymer composition having a higher flame retardancy. The amount of the metals or the transition metals in the metal hydroxide can be measured, for example, by inductively coupled plasma atomic emission spectrometry.

The metal hydroxide is, for example, the one whose surface is coated with hydroxide of the above transition metals, a solid solution of hydroxide of the above metals and hydroxide of the above transition metals, a eutectic containing crystal of hydroxide of the above metals and crystal of hydroxide of the above transition metals, or the like, and is preferably the one whose surface is coated with hydroxide of the above transition metals.

The metal hydroxide is usually particulate. The average particle diameter is 0.1 µm or larger and is preferably 0.5 µm or larger, and is 15 µm or smaller and is preferably 10 µm or smaller. When the average particle diameter of the metal hydroxide is smaller than 0.1 µm, it tends to become difficult to handle the metal hydroxide. On the other hand, when the average particle diameter is larger than 15 µm, it tends to become difficult to disperse the metal hydroxide uniformly in the thermoplastic polymer.

As the metal hydroxide, the percentage of particles with a diameter larger than 45 µm is preferably 0.1% or less by weight of the metal hydroxide.

The metal hydroxide may be prepared by the method in which, for example, a base is added to an aqueous solution prepared by dissolving water soluble salt of the above metals and water-soluble salt of the above transition metals in water.

The water-soluble salt of the metals is a halide (for example, chloride, bromide) or the like which is a metal compound soluble in water at from 0 degree C to 100 degrees C. Magnesium chloride, aluminum chloride, calcium chloride, magnesium bromide, aluminum bromide, calcium bromide and the like are exemplified. The concentration of water soluble salt of the metals in an aqueous solution is 0.01 mol or more and is preferably 0.1 mol or more, and is 5 mol or less and is preferably 1 mol or less per 1 kg of the aqueous solution.

The water soluble salt of the transition metals is a halide (for example, chloride, bromide) which is a transition metal compound soluble in water at from 0 degree C to 100 degrees C, a mineral acid salt (for example, nitrate) or the like. Manganese chloride, nickel chloride, zinc chloride, manganese bromide, nickel bromide, zinc bromide, manganese nitrate, nickel nitrate, zinc nitrate and the like are exemplified. The concentration of water soluble salt of the transition metals in an aqueous solution is 0.01 mol or more and is preferably 0.1 mol or more, and is 5 mol or less and is preferably 1 mol or less per 1 kg of the aqueous solution.

The aqueous solution prepared by dissolving a water-soluble salt of the above metals and a water-soluble salt of the above transition metals in water is acidic or neutral. The base to be added to this aqueous solution is an inorganic base or an organic base and is preferably an inorganic base. The inorganic base is an alkali metal hydroxide such as sodium hydroxide or potassium hydroxide, alkali metal aluminate such as sodium aluminate or potassium aluminate, ammonia, or the like.

By adding a base to the aqueous solution, the metal hydroxide described above containing metal, transition metal and hydroxyl is precipitated out, forming slurry.

For preparation of the metal hydroxide, after adding a base to the aqueous solution, the obtained slurry is preferably maintained for 1 hour or more, or 3 hours or less at a temperature between 0 degree C and 100 degrees C, that is, aged. Usually, the higher the temperature is and the longer the maintenance time is, the larger the particle diameter of the metal hydroxide can be obtained.

Solid-liquid separation is usually carried out for the obtained slurry. The solid-liquid separation may be carried out by, for example, filtration. Further, the metal hydroxide obtained by the solid-liquid separation is pulverized, classified or washed as necessary. Pulverizing or classifying can adjust the average particle diameter or the percentage of the particles having a particle diameter of larger than 45 µm.

In addition, the metal hydroxide may be prepared by another method in which, for example, after the hydroxide particles of the above metals have been dispersed in water, the aqueous solution of water soluble salt of the above transition metals is added. For the metal hydroxide particles used in this case, the average particle diameter is 0.1 µm or larger and preferably 0.5 µm or larger, and is 15 µm or smaller and preferably 10 µm or smaller. When the metal contained in the metal hydroxide is magnesium alone, calcium alone or a combination of magnesium and calcium, the available method is that water such as ion-exchange water or distilled water and magnesium hydroxide particles and/or calcium hydroxide particles are mixed together and then an aqueous solution of water soluble salt of the transition metals is added to the mixture.

Magnesium hydroxide and calcium hydroxide are basic salts. The mixture of these compounds and water behaves as a base. When an aqueous solution of water-soluble salt of the transition metals is added to the mixture, hydroxides of the transition metals are precipitated out without adding a base.

In this method, when magnesium hydroxide particles are used, a metal hydroxide containing magnesium, the above transition metals and hydroxyl can be obtained because hydroxide of the transition metals is precipitated on the surface of magnesium hydroxide particles. AS magnesium hydroxide particles, for example, "Kisuma 5" (made by Kyowa Chemical Industry Co. Ltd.), "H-5" and "H-10" (both made by Martinsberg Co.) are usable. When calcium hydroxide particles are used, a hydroxide containing calcium, the above transition metals and hydroxyl can be obtained because hydroxide of the transition metals is precipitated on the surface of the calcium hydroxide particles. As calcium hydroxide particles, for example, "Calmue" (made by Yoshizawa Lime Industry Co. LTD. ) , "Calteck" (made by Suzuki Kogyo Co. Ltd.) and "FineKalk" (made by Kawai Lime Industry Co. LTD.) can be used.

In another method mentioned, aging, pulverizing, classifying and washing as described above may be carried out as needed.

The amount of the metal hydroxide is usually 5 parts by weight or more and is preferably 50 parts by weight or more and is 250 parts by weight or less and is preferably 150 parts by weight or less for the thermoplastic polymer of 100 parts by weight. When the amount of the metal hydroxide becomes too large, it becomes difficult to melt-knead, and even if melt-kneading is possible, a thermoplastic polymer composition having a sufficient mechanical strength cannot be obtained.

Borate contained in the thermoplastic polymer composition of the present invention is an alkali borate such as sodium borate or potassium borate, zinc borate or the like. The average particle diameter of borate is usually 0.1 µm or larger and is preferably 0.5 µm or larger, and is usually 250 µm or smaller and is preferably 10 µm or smaller. The amount of borate is 1 part by weight or more and is preferably 5 parts by weight or more, and is 30 parts by weight or less and is preferably 15 parts by weight or less for the thermoplastic polymer of 100 parts by weight. When the amount of borate is less than 1 part by weight for the thermoplastic polymer of 100 parts by weight, flameless combustion time of the obtained thermoplastic polymer composition tends not to become sufficiently short. On the other hand, even if the amount of borate is more than 30 parts by weight, effects expected for the mixed amount cannot be obtained.

The thermoplastic polymer composition of the present invention is produced according to a method in which, for example, a thermoplastic polymer, metal hydroxide and borate are melt-kneaded. When melt-kneading is carried out, a commercially available melt-kneading machine may be used. The melt-kneading is usually carried out within a temperature range between the melting temperature or higher and the thermal decomposition temperature or lower of the thermoplastic polymer and is preferably within a temperature range between 10 degrees C higher (for example, 160 degrees C) than the melting temperature and 10 degrees C lower (for example, 250 degrees C) than the thermal decomposition temperature of the thermoplastic polymer.

Further, the thermoplastic polymer composition of the present invention is produced according to the following melt-kneading methods: In one of the methods, the thermoplastic polymer, the metal hydroxide and borate are blended together at a temperature lower than the melting temperature of the thermoplastic polymer and then the blended mixture is heated to a temperature equal to or higher than the melting temperature of the thermoplastic polymer, and melt-kneaded.

Further, in the other method, a thermoplastic polymer is heated to a temperature equal to or higher than the melting temperature thereof to melt, and metal hydroxide and borate are added to the melted thermoplastic polymer and then melt-kneaded.

The thermoplastic polymer composition of the present invention has excellent flame retardancy and a characteristic of short flameless combustion time without flame.

### Examples

The following examples illustrate the present invention in more detail. However, these examples are not to be read as limiting the scope of the present invention. The methods of measurement of physical constants in Examples are as follows:
Average particle diameter (µm) and percentage (%) of particles having a diameter of larger than 45 µm: A particle diameter distribution curve with vertical axis of cumulative weight and horizontal axis of particle weight was determined by the use of a laser scattering particle size analyzer (trade name, "Microtrac HRA X-100" manufactured by Reed and Northrup Co., Ltd.). The cumulative weight on the vertical axis of the particle diameter distribution curve was the value accumulated sequentially from larger particle size of equal to or smaller than 1000 µm. An average particle diameter was determined by the particle diameter that corresponded to the cumulative weight of 50% by weight. The cumulative weight of particles having a diameter larger than 45 µm was determined from the particle diameter distribution curve. Metal elemental analysis (% by weight) : It was determined by inductively coupled plasma atomic emission spectrometry.

### Production Example 1:

### Preparation of metal hydroxide

After 192g of water solution of manganese chloride (II) having a concentration of 0.2 mol/kg had been added to a slurry of 100g of magnesium hydroxide particles ("Kisuma 5", an average particle diameter: 0.6 µm, made by Kyowa Chemical Industry Co. Ltd. ) and 200g of water, the mixture was heated up to 70 degrees C and maintained for one hour at the same temperature. Then the mixture was cooled off and filtered. The obtained solid was washed and dried for 3 hours at 120 degrees C, thereby obtaining a metal hydroxide. This metal hydroxide contained magnesium, manganese and hydroxyl, and had an average particle diameter of 0 . 6 µm, having practically no particles larger than 45 µm (0.0% by weight). This metal hydroxide contained 41% by weight of magnesium and 1.5% by weight of manganese.

### Example 1

One hundred and ten parts by weight of the metal hydroxide obtained in Production Example 1, 10 parts by weight of zinc borate (trade name "Alcanex FRC-500", an average particle diameter; 3.6 µm, made by Mizusawa Industrial Chemical Ltd. Co. ) and 100 parts by weight of polypropylene ("AY-161C", melting temperature: 163 degrees C, made by Sumitomo Chemical Co. Ltd.) were melt-kneaded for 10 minutes at 180 degrees C to obtain a composition. This composition was press-molded under the conditions of temperature; 180 degrees C, pressure; 10 MPa, and time; 10 minutes, and a test piece having a length of 5 inches (approximately 130 mm) , a width of 1/5 inch (approximately 1.25 mm) and a thickness of 1/8 inch (0.32 mm) was obtained. With the use of this test piece, a combustion test was carried out according to the UL-94 Standard. The results were that the combustion time with flame was 3 seconds and that the subsequent flameless combustion time observed was 30 seconds or shorter.

### Comparative Example 1

A test piece was prepared by the same procedure as that of Example 1 except that zinc borate was not added and a flame retardancy of this test piece was evaluated. In this case, the combustion time with flame was 32 seconds and the subsequent flameless combustion time observed was 3 minutes or longer.

## Claims

1. A thermoplastic polymer composition comprising:
a metal hydroxide containing at least one metal selected from the group consisting of magnesium, aluminum and calcium, at least one transition metal selected from the group consisting of manganese, nickel and zinc, and hydroxyl;
a borate; and
a thermoplastic polymer.

2. The thermoplastic polymer composition according to Claim 1, wherein the amount of the transition metals is 0.2% or more by weight and 20% or less by weight of the metal hydroxide.

3. The thermoplastic polymer composition according to Claim 1 or 2, wherein the amount of the metal hydroxide is 5 parts by weight or more and 250 parts by weight or less for 100 parts by weight of the thermoplastic polymer

4. The thermoplastic polymer composition according to any of Claims 1 to 3, wherein the metal hydroxide is the one whose surface is coated with hydroxide of said transition metals, a solid solution of hydroxide of said metals and hydroxide of said transition metals, or a eutectic containing crystal of hydroxide of said metals and crystal of hydroxide of said transition metals.

5. The thermoplastic polymer compositionaccording to any of 25 Claims 1 to 3,whereinthe surface of the metal hydroxide is coated with hydroxide of said transition metals.

6. The thermoplastic polymer compositionaccording to any of Claims 1 to 5, wherein the borate is lithium borate, sodium borate, potassium borate, rubidium borate or zinc borate.

7. The thermoplastic polymer composition according to any of Claims 1 to 6, wherein the amount of the borate is 1 part by weight or more and 30 parts by weight or less for 100 parts by weight of the thermoplastic polymer composition.

8. The thermoplastic polymer composition according to any of Claims 1 to 7, wherein the thermoplastic polymer is selected from polyolefin, styrene resin, polyester resin, polycarbonate resin, polyphenylene sulfide resin, polyoxymethylene resin and thermoplastic elastomer.

9. The thermoplastic polymer composition according to any of Claims 1 to 7,whereinthe thermoplastic polymer is polyolefin.

10. A production method of the thermoplastic polymer composition in which a metal hydroxide containing at least one metal selected from the group consisting of magnesium, aluminum and calcium, at least one transition metal selected from the group consisting of manganese, nickel and zinc, and hydroxyl; a borate; and a thermoplastic polymer are melt-kneaded.

11. The method according to Claim 10, wherein the metal hydroxide is the one whose surface is coated with hydroxide of said transition metals, a solid solution of hydroxide of said metals and hydroxide of said transition metals, or a eutectic containing crystal of hydroxide of said metals and crystal of hydroxide of said transition metals.

12. The method according to Claim 10, wherein the surface of the metal hydroxide is coated with hydroxide of said transition metals.

13. The method according to any of Claims 1 to 12 , wherein the melt-kneading is carried out at a temperature between the melting temperature or higher and the thermal decomposition temperature or lower of the thermoplastic polymer.
